# EUROPEAN PATENT SPECIFICATION

(11) **EP 3 446 394 B1**
(45) Date of publication and mention of the grant of the patent: **28.04.2021**
(21) Application number: 15843065.2
(22) Date of filing: 04.12.2015
(51) Int. Cl.: H02S 10/12, H02S 10/20, H02S 10/30, H02S 30/20, H02S 20/30, H02S 40/32, H02S 40/34, H02J 7/35

(54) **TRANSPORTABLE INTEGRATED STAND-ALONE APPARATUS**
TRANSPORTABLE INTEGRIERTE EIGENSTÄNDIGE VORRICHTUNG
APPAREIL AUTONOME INTÉGRÉ TRANSPORTABLE

(43) Date of publication of application: 27.02.2019
(73) Proprietor: Sun Night S.r.l., 19038 Sarzana (SP) (IT)
(72) Inventor: BIANCO, Vincenzo, 19136 La Spezia (SP) (IT); RAVAGNAN, Giampietro, 00164 Roma (IT)
(74) Representative: Leotta, Antonio
(86) International application number: PCT/IT2015/000294
(87) International publication number: WO 2017/094033

(56) References cited:
- US-A1- 2010 274 408
- US-A1- 2013 106 191
- US-A1- 2013 113 281
- US-A1- 2013 234 645
- US-A1- 2015 155 414
- US-B1- 6 396 239

## Description

### TECHNICAL SECTOR

The present invention relates to a transportable integrated stand-alone apparatus for the production of energy from discontinuous renewable sources and the delivery of the same to a plurality of utilities.

### STATE OF THE ART

Stand-alone installations for the production of energy from renewable sources are characterized by the absence of mains connections. In these cases, the installation provides directly the production and supply of electricity for the entire energy requirement. This type of installation is also known with the name "Stand-alone Systems" and it is distinguished from grid-tied (grid-connected) installations. Between on island popular and known are those solar and wind power.

Stand-alone systems are known for the production of energy from renewable sources which allow to produce energy in areas not reached by the mains and to store it temporarily to then feed domestic users, small industrial utilities, or to address the energy needs of small communities. For example, this type of installation is used in very remote places on the planet, or with adverse weather conditions, such as deserts, polar regions, or the like.

All stand-alone apparatus for the production of energy from renewable sources of the prior art include some essential elements listed below.

First, to such installations they are associated sources of energy, which usually are constituted by photovoltaic panels, but which may also comprise wind turbines or other sources of different types.

Storage batteries are always present because they are necessary to accumulate the energy produced by the photovoltaic modules, which are discontinuous renewable sources, to permit their retarded use. In most of the conventional stand-alone systems the energy produced in a discontinuous manner by the photovoltaic modules can be used in a deferred way thanks to the presence of the batteries, but they are unable to guarantee the possibility of continuous use of the energy for 24 hours a day, i.e. both when energy is being harvested and when energy cannot be harvested.

At least one charge controller is present because it is intended to manage energy harvesting. Normally the electric energy has a stabilized voltage of 12 or 24 Volts. The charge controller provides to detach the photovoltaic system and / or the wind turbines from the battery in case the latter is charged and in cases of low voltage (e.g. Night time) or from voltage feedbacks from battery to PV module. The charge controller is often integrated into a more complex battery management system (or BMS - Battery Management System).At least one inverter is intended to convert the DC power produced by photovoltaic panels or wind generators and stored in the batteries into AC current used by the users of the energy produced by the plant. In fact, the output current from the inverters normally has a standard voltage of 110 or 220 volts to allow for the supply of electrical / electronic devices.

Basic features for a stand-alone apparatus for the production of energy concern the ability to produce and store energy. These two characteristics depend on the type and capacity of batteries used and the ability to produce energy from the available renewable sources.

For example, patent document No. US 2011/0057512 describes a stand-alone plant with very high capacity to harvest and storage of energy. However, the apparatus described therein is extremely bulky and therefore costs of transport and installation are very high so it is absolutely not suitable to be moved and transferred after the first installation.

A transportable stand-alone apparatus cannot reach the production capacity and storage of energy provided by the above cited document, however, it is desirable to seek solutions which, without sacrificing the portability of the apparatus, are able to maximize the energy production and the storage capacity. In particular, it is particularly desirable to ensure an energy storage capacity enough to cover the energy needs of the users connected in the time periods when the plant is not harvesting energy from the renewable sources connected, for example in the night time if the plant is connected only to photovoltaic panels, or in periods of no wind when the apparatus is powered by wind energy sources.

An attempt to solve the above problem is described in Italian patent n. 1409341 which describes a stand-alone apparatus which can be powered by a plurality of renewable energy sources and able to supply energy to a plurality of types of users. The apparatus includes battery packs with capacity such to cover the entire daily requirement, so even during night when energy is not harvested, provided that the connected users do not require more energy than expected on the nameplate of the apparatus. However, the ability to meet the energy needs is conditioned by the fact that the apparatus is actually used in accordance with the specifications of use.

They are also known stand-alone portable devices that integrate the ability to collect and store electricity from renewable sources and to treat water from various sources to decontaminate or make it drinkable.

To the above problem, instead, it gives a solution, albeit partial, the international patent application published under n. WO 2013/093654 in which to an apparatus for the production of energy by a plurality of renewable sources able to accumulate enough energy to supply the energy needs of a small settlement even during short periods of time (for example overnight) without energy production, is associated with a plant for the treatment of water that provides reverse osmosis filters and possibly also a system of purification by UV rays. However, the apparatus described in the above question, in addition to suffering the same limitations related to the management of the harvested energy as the apparatus of the aforementioned Italian patent n. 1409341, is certainly optimizable both from the point of view of effectiveness of the water treatment, both due to the lack of additional capabilities of high importance for the subsistence of human settlements in remote or isolated parts of the planet. US2013/234645A1 discloses a portable solar energy system.

### SUMMARY OF THE INVENTION

It is an object of the present invention is to propose an integrated apparatus for the production of energy from renewable sources which is structured to allow particularly easy maintenance operations.

Another object of the present invention is to propose an integrated apparatus for the production of energy from renewable sources extremely compact and versatile, which allows to manufacture with a very low production costs, a wide range of models in order to suit the different energy needs of human settlements of dimensions very variables.

The above objects and others are achieved by means of an integrated stand-alone transportable apparatus integrated comprising:
- DC generators,
- at least one DC / DC converter adapted to receive the DC power from one or more strings of said DC generators and transform it into DC power output at a certain voltage;
- electric batteries and charging means thereof providing a battery management system;
- a DC / AC inverter adapted to receive DC power and provide it in output to one or more users connected to it, one of them being at least one water treatment device;
- an electronic switching module adapted to receive DC power from said DC / DC converter and from said batteries and to provide DC power to said DC / AC inverter and any DC appliances,
- a control unit comprising a control module for controlling the energy production and supply of energy and a water control module for controlling the operation of said water treatment device,
wherein said power control module controls the operation of said DC / DC converter, of said electronic switching module and of said DC / AC inverter, so as to manage the power supply to all users, and
wherein said at least one DC / DC converter, said batteries for electric energy storage, said DC / AC inverter, said electronic switching module and said control unit are comprised in a transportable container on wheels provided with a user interface for the interrogation, management and programming of said control unit, sockets for the connection of external electric loads, input and output hydraulic fittings of said water treatment device; and
wherein said transportable container comprises at least one sliding drawer structure on which are mounted said batteries, in such a way that the operations of maintenance of said batteries can be carried out easily by extracting said sliding drawer structure.

In an apparatus as outlined above, the energy control module controls the operation of said DC / DC converter, of said switching module and of said electronic DC / AC inverters, so as to manage the supply of energy to all utilities.

The apparatus described above is able to produce energy, accumulating it and then supply it in a particularly effective way both to feed a water treatment device included in the apparatus and for supplying other electrical loads that can be connected to the apparatus.

Advantageously, the storage batteries are formed by a plurality of identical Li-Ion / Pb batteries and the DC / AC inverter is suitable to receive in input a plurality of different voltages which are function of the number of batteries installed in the apparatus. With the charge accumulated in the batteries even more appliances, resources, and communication systems can be charged such as computers and mobile phones.

Further advantageous features of the invention are defined in the attached apparatus dependent claims.

According to another aspect of the present invention the above purposes are achieved by means of a method for managing the energy produced by an integrated stand-alone apparatus comprising a plant for the production of energy from discontinuous renewable sources, wherein said apparatus comprises DC generators, electric batteries and charging means thereof with a battery management system, a control unit comprising a control module for controlling the energy production and supply of energy, and a plurality of users intended to receive energy from said battery, wherein the apparatus comprises an electronic switching module interposed between said battery and said users, and wherein said control unit is programmed to control said electronic switching module as a function of a predefined hierarchical order of importance of those users,
wherein said at least one DC / DC converter, said batteries for electric energy storage, said DC / AC inverter, said electronic switching module and said control unit are comprised in a transportable container on wheels provided with a user interface for the interrogation, management and programming of said control unit, sockets for the connection of external electric loads, input and output hydraulic fittings of said water treatment device; and
wherein said transportable container comprises at least one sliding drawer structure, and
wherein said batteries are mounted in said sliding drawer structure and maintenance of said batteries is carried out by extracting said sliding drawer structure.

Thanks to the method of the invention the supply of energy is managed so as to give priority to the supply of utilities considered the most important, if necessary suspending the supply of less important loads in the case that it is necessary to ration the energy in the batteries.

### BRIEF DESCRIPTION OF THE DRAWINGS

These and other features of the invention will be more easily understood from the following description of embodiments thereof, provided as non-limiting examples, with reference to the accompanying figures in which:
- Figure 1 shows a perspective view of a transportable integrated stand-alone apparatus according to the present invention in the configuration for transportation;
- Figure 2 shows a perspective view of the apparatus of Fig. 1 in the configuration of use;
- Figure 3 shows a side view of the apparatus of fig.2;
- Figure 4 shows a rear view of the apparatus of the preceding figures in a configuration suitable to facilitate maintenance operations of the apparatus;
- Figure 5 shows a block diagram of the system of harvesting, storage, distribution and management of energy in an apparatus according to the present invention;
- Figure 6 shows a block diagram of a water treatment device comprised in an apparatus of the present invention.

### DESCRIPTION OF THE PREFERRED EMBODIMENTS

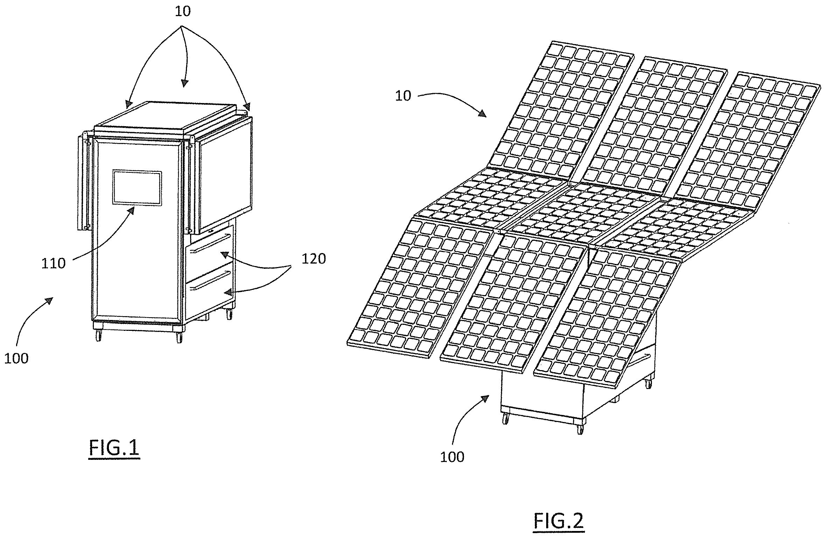

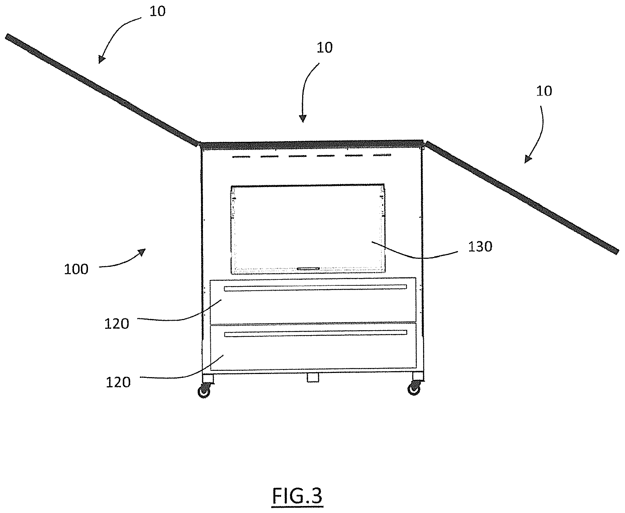

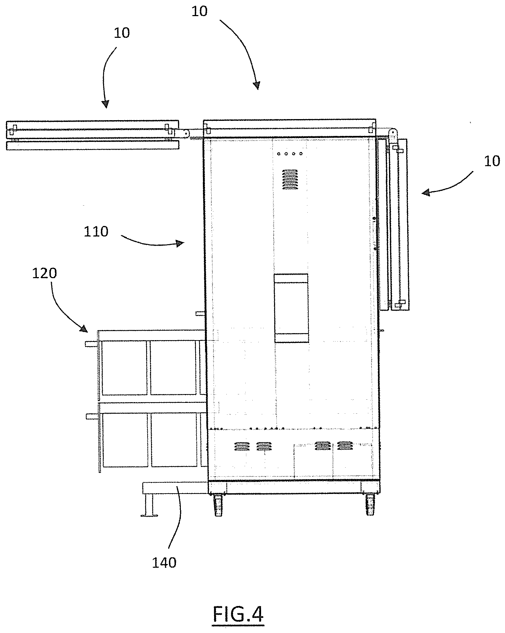

With reference to Figures 1 to 4 an integrated apparatus according to the present invention, is constituted by a transportable container on wheels 100, provided with a user interface, 110, for the interrogation, management and programming of an apparatus control unit, electrical connection sockets for the connection of external electric loads, hydraulic fittings of inlet and outlet for a water treatment device comprised in the apparatus, and at least one sliding drawer structure, 120, to which are mounted storage batteries, filters of the aforesaid water treatment device and / or other components of the apparatus which will be described below. To the upper surface of the storage unit 100 are connected photovoltaic modules, 10, in a manner already described in the aforementioned International Application WO 2013/093654. As shown in Figures 1 and 2 such an arrangement of photovoltaic modules 10 is particularly effective since it allows to have extremely contained overall dimensions of the apparatus during transportation and when it is not in use and at the same time, without removing from the apparatus the photovoltaic modules 10 a great amount of surface area of modules can be used which can in large part be tilted toward the sun to optimize the production of energy.

The transportable container 10 advantageously has a compact shape of a parallelepiped with supporting frames and side panels for protection and insulation and is provided with a door, 130, which allows a large and convenient access to the inner space, extractable stabilizers which serve to stabilize the position of the apparatus when in use and useful also to avoid any danger of tipping apparatus after extraction of the drawer structures 120.

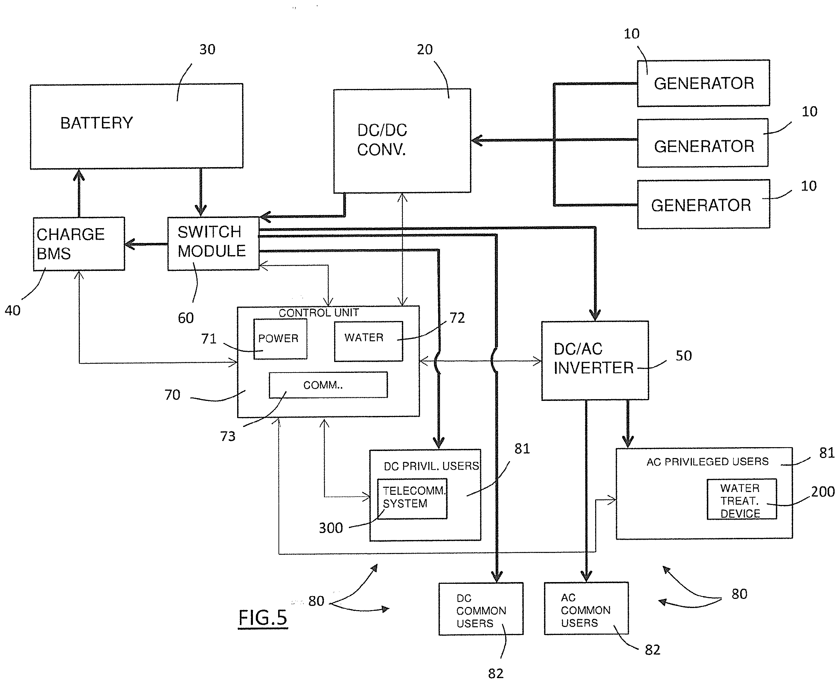

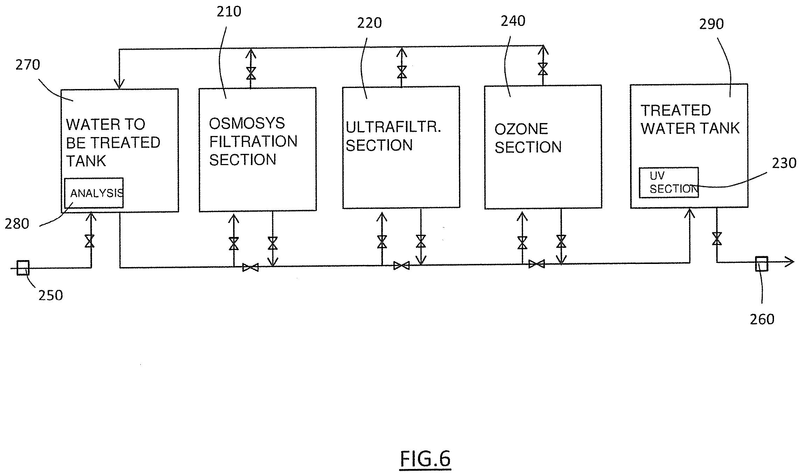

The advantages and other features of the structure of the movable container 100 will be further apparent in the following description of the components accommodated in the apparatus of which is now given a description of exemplary, non-limiting, with reference to the block diagram of Figures 5 and 6.

The apparatus comprises first of all the aforementioned photovoltaic modules 10 which are advantageously high efficiency photovoltaic modules made of transparent polymer material resistant to UV radiation, a peak power of the single panel equal to or greater than 130Wp and operating temperatures from -40 ° to + 85 ° C, then these can be used to substantially any latitude. The photovoltaic modules 10 constitute, with most general sense, power generators in a current of energy, which will be cited in the following with the same reference. To this category also belong to the wind generators, which can be associated to the apparatus of the invention, in addition or alternative to the PV modules, to increase the energy that can be harvested from the apparatus. Wind generators particularly advantageous to be associated to the apparatus of the present invention are constituted by vertical-axis wind turbines with a nominal power of about 3 KW each.

The current generators 10, which in the case of photovoltaic modules are certainly connected in strings, are connected to a DC / DC converter, 20, adapted to receive the DC power from one or more strings generators in continuous current and to transform it to output DC power with parameters stabilized.

A plurality of storage batteries, 30, are suitably housed in the lower part of the cabinet, with overall storage capacity advantageously comprised between 3 KVA and 30 KVA. Advantageously, said storage capacity are ensured by a plurality of identical Li-Ion batteries with elements sized 3.3 V and 160 Ah which are housed in the apparatus in a different number depending on the power of the specific model of an apparatus according to the invention.

Advantageously, the batteries are mounted on a sliding drawer structure 120 of the transportable container 100 so that when it has to be provided for the replacement or maintenance their removal is particularly easy.

The batteries are associated with corresponding charge means, 40, equipped with a battery management system that optimizes, according to known techniques, the recharging of the batteries avoiding overloads or other problems that could damage the batteries 30 or alter their optimal functioning.

The apparatus further comprises, a DC / AC inverter, 50, an electronic switching module, 60, and a control unit 70, which altogether manage the storage of energy in the batteries 30 and its timely delivery to a plurality of users, 80, both in DC and in AC.

The switching module 60 receives energy from the DC / DC converter 20 to transmit it to the charge means 40 and then to the batteries 30. In addition, the switching module 60 receives power from the batteries and via its own boost stage transforms it to supply the inverter DC / AC 50 with power at a determined voltage, advantageously 110V. In addition, the switching module 60 also provides power directly to DC users 80.

The DC / AC inverter 50 is power supplied by the switching module 60 and provides AC power to AC users 80.

The loads 80 are divided into at least two categories of users, that is to say a category of privileged users, 81 and a category of common utilities, 82. The control unit 70, via its own energy control module, 71, manages the switching module 60 and the DC / AC inverter 50 so that the power supply to the loads 80 takes into account, through their predefined and / or settable operating algorithms, the distribution of energy between privileged users 81 and common users 82 .

According to an advantageous but not limiting embodiment of the present invention, the privileged users 81 includes all those appliances which are an integral part of the apparatus of the invention, while between the common utilities 82 there are the external loads that are supplied by the apparatus via appropriate sockets provided in a side panel of the container 100.

A water treatment device, 200, is one of the AC privileged users 81 comprised in the apparatus of the invention.

A block diagram of a water treatment apparatus 200 advantageously housed in the transportable container 100 is shown in Figure 6.A side panel of the container 100 is provided with at least a hydraulic input fitting, 250, and at least one hydraulic output fitting, 260, of the aforesaid water treatment device 200. The water to be treated is fed into a vessel for water to be treated, 270, in which samples of water before being treated are advantageously analysed by means of a suitable automatic analysis unit, 280.The main purpose of the analysis is to determine the level and type of contamination of the water to determine, also as a function of the type of use for which the treated water is intended (drinking water or not), the treatment or treatments to be performed. In fact, the treatment device 200 comprises a filtering section with osmotic membranes, 210, a ultrafiltration section with capillary and graphene membranes, 220, a possible ozone purification section, 240, and a germicidal UV rays section, 230, laid in a treated water collecting tank, 290.The hydraulic connections between the various sections, represented in figure very schematically, are such that each of the aforementioned sections can be bypassed and that the water to be treated may be sent to the tank 290 or the treated water back to the water to be treated tank. The treatment device is managed by a water control module, 72, the control unit 70 of the apparatus, so that the water treatment takes place according to predefined and settable programs, depending on the type of use that must have the water treated and the type and degree of contamination of the inlet water, set in the control unit or detected by the analysis unit 280. For example, if the incoming water has a low contamination degree it can be executed just a purifying treatment in the osmosis filtration sections 210 and eventually in the germicidal UV rays section 230, while if the incoming water has a high contamination degree it is necessary to perform a preliminary purification in the ozone purification section 240, and then the water can be treated or not in the other sections depending on the use to be made of the treated water.

The water treatment process described is particularly suitable for the production of drinking water from brackish water / salt and / or fresh water with particular contaminants that make it unsuitable for drinking.

All or some of the treatment sections 210, 220, 230, 240 are advantageously installed integral with a extractable drawer structure 120 of the transportable container 100.In this way, the operations of standard maintenance of the water treatment device 200, such as the cleaning or replacement of filters, can take place in a very smooth way.

In various embodiments of the present invention, a water treatment device comprised in the apparatus may also not include all the processing sections described above, or may comprise still other sections such as a desalination unit. In addition, some components of the water treatment device, such as the water to be treated tank 270 and the treated water tank 290 may not be present or may be associated externally to the transportable container 100.

A telecommunication system, 300 is also one of the privileged DC users 81. The telecommunication system 300 comprises a satellite communication module 310, suitable to provide satellite connection both for data communications and voice communications, and a module for generating a hot spot wireless network, 320.The telecommunication system 300 is able to create a local wireless network within an area of several kilometres, to which enabled general purpose devices can connect such as smartphones, tablets, notebooks, PC, or devices dedicated to specific tasks such as environmental monitoring devices or other. Thanks to the satellite communication module 310 the telecommunication system 300 allows for such devices that are within range of the wireless network to connect any device that can be reached by the satellite network, so in practice around the world, both for voice communications and for data communications. The telecommunication system is operated by a communications control module 73 of the control unit. Further, the foregoing features of the telecommunication system 300 also allow access to the control unit 70 not only by the interface 110 present on a side panel of the container 100, but also from portable devices recognized in the wireless network generated by module 320 and from devices connected to the apparatus by even very remote locations through the satellite communication module 310.

As it will be immediately apparent from the description given above, numerous are the advantages of an transportable integrated stand-alone apparatus according to the present invention, especially in view of a use in remote areas of the planet in the presence of small human settlements. In fact, in this specific application, the apparatus of the invention provides in a single transportable huosing a large number of appliances of primary importance such as energy supply, the water supply, the charging of electric vehicles and the possibility of communicate with the rest of the world, all with a view at having a minimum environmental impact as the system receives power exclusively from renewable sources. Still in view of a use by small human settlements in remote areas of the planet, the composition of an apparatus according to the invention as described above allows an optimal management of the energy resources, performed by the control unit 70.In fact, the control unit 70 is programmed to control the electronic switching module 60 as a function of a predefined hierarchical order of importance of the users 80, giving preference to supplying a category of privileged users 81 compared to common users 82 if the remaining amount of energy in the battery 30 needs to be rationed. Among the privileged users 81 there are the water treatment device 200 and the telecommunication module 300 which, as above said, have a fundamental importance in the environments of use of the apparatus and allow a remote control of the apparatus itself. Advantageously, the control unit 70 controls the electronic switching module as a function of parameters relating to the state of charge of the batteries 30 and of parameters related to the rate of production of energy by the DC generators 10. In fact, in the case that the generators 10 are photovoltaic modules, these are able to produce power and to feed the battery 30 only in the daytime period, so that during nightime may be necessary to ration the power supply to the users preferring the most important users, namely the appliances that are included in the category of privileged users 81. In this case the control unit 70 may also inhibit the power supply to the common loads 82 to prolong the power supply to the privileged users 81 as a function of the parameters relating to the state of charge of the batteries 30 and of parameters related to the rate of production of energy by the DC generators 10.As previously mentioned, among the privileged users are included, by default, the water treatment device 200 and the telecommunication module 300.This default setting of the control unit 70 can be modified, for example by inserting between the privileged users 81 one of the sockets of the side panel of the container 100 which will be intended for the connection of a user of particular importance, such as medical equipment or similar.

The apparatus of the invention is characterized by a great flexibility of its different modules depending on the requirements of use.

In addition, the apparatus and the unique power management modes have obvious advantages and meet the needs of isolated communities whether in marine areas or in mountain areas, especially in relation to the specific field of use mentioned; However, modifications and variations can certainly be provided, though always remaining within the scope of protection defined by the following claims.

## Claims

1. Transportable integrated stand-alone apparatus comprising:
- DC generators (10),
- at least one DC / DC converter (20) suitable to receive the DC power from one or more strings of said DC generators and transform it to an output DC power at a certain voltage;
- batteries for electric energy storage (30) and charge means (40) provided with a battery management system;
- a DC / AC inverter (50) adapted to receive DC power and provide it in output to one or more users connected to it, among which at least one water treatment device (200);
- an electronic switching module (60) adapted to receive DC power from said DC / DC converter (20) and said batteries (30) and to provide DC power to said DC / AC inverter (50) and any DC users,
- a control unit (70) comprising a power control module (71) for controlling the production and supply of energy and a water control module (72) for controlling the operation of said water treatment device (200);
wherein said power control module (71) controls the operation of said DC / DC converter (20), of said electronic switching module (60) and of said DC / AC inverter (50), so as to manage the power supply to all users, and
wherein said at least one DC / DC converter (20), said batteries for electric energy storage (30), said DC / AC inverter (50), said electronic switching module (60) and said control unit (70) are comprised in a transportable container on wheels (100) provided with a user interface (110) for the interrogation, management and programming of said control unit (70), sockets for the connection of external electric loads, input (250) and output (260) hydraulic fittings of said water treatment device (200); said transportable integrated stand alone apparatus being
**characterized in that** said transportable container comprises at least one sliding drawer structure (120) on which are mounted said batteries (30), in such a way that the operations of maintenance of said batteries (30) can be carried out easily by extracting said sliding drawer structure (120).

2. Transportable integrated stand-alone apparatus according to claim 1 **characterized in that** said batteries include a plurality of identical Li-Ion / Pb batteries and **in that** said DC / AC inverter is suitable to receive in input a plurality of different voltages which are function of the number of said batteries installed in the apparatus.

3. Transportable integrated stand-alone apparatus according to claim 1 or 2 **characterized in that** said water treatment device (200) comprises a plurality of treatment sections including at least a reverse osmosis filtration section (210) at least one ultrafiltration section (220) and at least UV rays treatment section (230).

4. Transportable integrated stand-alone apparatus according to the previous claim **characterized in that** said water treatment device (200) comprises at least an ozone sanitization section (240) for water for sanitary / drinking use.

5. Transportable integrated stand-alone apparatus according to claim 3 or 4 **characterized in that** said treatment sections are hydraulically connected to an inlet conduit of water to be treated (201) and to a duct for output of treated water (202) such that each of said sections can be activated or bypassed by said water control module (72).

6. Transportable integrated stand-alone apparatus according to the previous claim **characterized in that** said water treatment device includes water analysis units (205) for the treated water and the water to be treated and that said water control module (72) controls the activation or bypass of said treatment sections depending on the results of water analysis performed by the analysis unit (205).

7. Transportable integrated stand-alone apparatus according to one of the preceding claims **characterized in that** it comprises a telecommunication module (300) provided with a satellite communication module (310) for voice and data satellite communications and hot-spot wireless network module (320).

8. Transportable integrated stand-alone apparatus according to the previous claim **characterized in that** said control unit (70) comprises a communications control module (73) suitable to manage said telecommunication module (300) and **in that** said telecommunication module (300) is powered with DC power through said electronic switching module (60).

9. Transportable integrated stand-alone apparatus according to claim 1 and 4 **characterized in that** said transportable container on wheels (100) is provided with at least a further sliding drawer structure (120) on which are mounted components of said treatment sections (210, 220, 230, 240) of said water treatment device (200).

10. Transportable integrated stand-alone apparatus according to claim 1 and 4 **characterized in that** said transportable container on wheels (100) has a compact shape of a parallelepiped with supporting frames and side panels for protection and insulation and is provided with a door (130) which allows a large and convenient access to the inner space and extractable stabilizers which serve to stabilize the position of the apparatus when in use and useful also to avoid any danger of tipping apparatus after extraction of the drawer structures (120).

## Patentansprüche

1. Transportierbar, integrierte, eigenständige Vorrichtung umfassend:
- Gleichstromgeneratoren (10),
- mindestens einen Gleichstrom/Gleichstrom-Wandler (20), der geeignet ist, die Gleichstromversorgung von einem oder mehreren Strängen der Gleichstromgeneratoren zu empfangen und sie in eine Ausgangs-Gleichstromversorgung bei einer bestimmten Spannung umzuwandeln;
- Batterien zur Speicherung elektrischer Energie (30) und Lademittel (40), die mit einem Batteriemanagementsystem versehen sind;
- einen Gleichstrom/Wechselstrom-Wechselrichter (50), der so ausgelegt ist, dass er Gleichstrom empfängt und ihn als Ausgang an einen oder mehrere daran angeschlossene Verbraucher, darunter mindestens eine Wasseraufbereitungsvorrichtung (200), liefert;
- ein elektronisches Schaltmodul (60), das dazu ausgelegt ist, Gleichstrom von dem Gleichstrom/Gleichstrom-Wandler (20) und den Batterien (30) zu empfangen und Gleichstrom an den Gleichstrom/Wechselstrom-Wechselrichter (50) und beliebige Gleichstromverbraucher zu liefern,
- eine Steuereinheit (70), die ein Leistungssteuermodul (71) zur Steuerung der Erzeugung und Zufuhr von Energie und ein Wassersteuermodul (72) zur Steuerung des Betriebs der Wasserbehandlungsvorrichtung (200) umfasst;
wobei das Leistungssteuermodul (71) den Betrieb des Gleichstrom/Gleichstrom-Wandlers (20), des elektronischen Schaltmoduls (60) und des Gleichstrom/Wechselstrom-Wechselrichters (50) steuert, um die Energieversorgung aller Benutzer zu verwalten, und
wobei der mindestens eine Gleichstrom/Gleichstrom-Wandler (20), die Batterien zur Speicherung elektrischer Energie (30), der Gleichstrom/Wechselstrom-Wechselrichter (50), das elektronische Schaltmodul (60) und die Steuereinheit (70) in einem transportierbarn Behälter auf Rädern (100) enthalten sind, der mit einer Benutzerschnittstelle (110) für die Abfrage, Verwaltung und Programmierung der Steuereinheit (70), Steckdosen für den Anschluss externer elektrischer Lasten, Eingangs- (250) und Ausgangshydraulikanschlüssen (260) der Wasseraufbereitungsvorrichtung (200) versehen ist;
**dadurch gekennzeichnet, dass** der transportierbar Behälter mindestens eine verschiebbare Schubladenstruktur (120) umfasst, auf der die Batterien (30) so angebracht sind, dass die Wartungsvorgänge der Batterien (30) leicht durch Herausziehen der verschiebbaren Schubladenstruktur (120) durchgeführt werden können.

2. Transportierbar, integrierte, eigenständige Vorrichtung nach Anspruch 1, **dadurch gekennzeichnet, dass** die Batterien eine Vielzahl von identischen Li-Ion/Pb-Batterien umfassen und dass der Gleichstrom/Wechselstrom-Wechselrichter geeignet ist, am Eingang eine Vielzahl von unterschiedlichen Spannungen zu empfangen, die eine Funktion der Anzahl der in dem Gerät installierten Batterien sind.

3. Transportierbar, integrierte, eigenständige Vorrichtung nach Anspruch 1 oder 2, **dadurch gekennzeichnet, dass** die Wasseraufbereitungsvorrichtung (200) eine Vielzahl von Behandlungsabschnitten umfasst, die mindestens einen Umkehrosmose-Filterabschnitt (210), mindestens einen Ultrafiltrationsabschnitt (220) und mindestens einen UV-Strahlen-Behandlungsabschnitt (230) umfassen.

4. Transportierbar, integrierte, eigenständige Vorrichtung nach dem vorhergehenden Anspruch, **dadurch gekennzeichnet, dass** die Wasseraufbereitungsvorrichtung (200) mindestens einen Ozon-Sanitisierungsabschnitt (240) für Wasser für den Sanitär-/Trinkgebrauch umfasst.

5. Transportierbar, integrierte, eigenständige Vorrichtung nach Anspruch 3 oder 4, **dadurch gekennzeichnet, dass** die Behandlungsabschnitte hydraulisch mit einer Einlassleitung für zu behandelndes Wasser (201) und mit einer Leitung für die Ausgabe von behandeltem Wasser (202) verbunden sind, so dass jeder der Abschnitte durch das Wassersteuermodul (72) aktiviert oder umgangen werden kann.

6. Transportierbar, integrierte, eigenständige Vorrichtung nach dem vorhergehenden Anspruch, **dadurch gekennzeichnet, dass** die Wasserbehandlungsvorrichtung Wasseranalyseeinheiten (205) für das behandelte Wasser und das zu behandelnde Wasser enthält und dass das Wassersteuermodul (72) die Aktivierung oder Umgehung der Behandlungsabschnitte in Abhängigkeit von den Ergebnissen der von der Analyseeinheit (205) durchgeführten Wasseranalyse steuert.

7. Transportierbar, integrierte, eigenständige Vorrichtung nach einem der vorhergehenden Ansprüche, **dadurch gekennzeichnet, dass** sie ein Telekommunikationsmodul (300) umfasst, das mit einem Satellitenkommunikationsmodul (310) für Sprach- und Datensatellitenkommunikation und einem drahtlosen Hot-Spot-Netzwerkmodul (320) versehen ist.

8. Transportierbar, integrierte, eigenständige Vorrichtung nach dem vorhergehenden Anspruch, **dadurch gekennzeichnet, dass** die Steuereinheit (70) ein Kommunikationssteuermodul (73) umfasst, das geeignet ist, das Telekommunikationsmodul (300) zu verwalten, und dass das Telekommunikationsmodul (300) über das elektronische Schaltmodul (60) mit Gleichstrom versorgt wird.

9. Transportierbar, integrierte, eigenständige Vorrichtung nach Anspruch 1 und 4, **dadurch gekennzeichnet, dass** der transportierbar Behälter auf Rädern (100) mit mindestens einer weiteren verschiebbaren Schubladenstruktur (120) versehen ist, auf der Komponenten der Behandlungsabschnitte (210, 220, 230, 240) der Wasserbehandlungsvorrichtung (200) montiert sind.

10. Transportierbar, integrierte, eigenständige Vorrichtung nach Anspruch 1 und 4, **dadurch gekennzeichnet, dass** der transportierbar Behälter auf Rädern (100) eine kompakte Form eines Parallelepipeds mit Stützrahmen und Seitenpaneelen zum Schutz und zur Isolierung aufweist und mit einer Tür (130) versehen ist, die einen großen und bequemen Zugang zum Innenraum ermöglicht, sowie mit ausziehbaren Stabilisatoren, die dazu dienen, die Position der Vorrichtung im Gebrauch zu stabilisieren, und die auch nützlich sind, um jede Gefahr eines Kippens der Vorrichtung nach dem Herausziehen der Schubladenstrukturen (120) zu vermeiden.

## Revendications

1. Appareil autonome intégré transportable comprenant
- des générateurs de tension continu (10),
- au moins un convertisseur continu/continu (20) capable de recevoir une tension continue d'une ou plusieurs chaînes desdits générateurs de tension continu et de transformer cette tension continue en à un certain voltage;
- des batteries pour le stockage de l'énergie électrique (30) et des moyens de charge (40) dotés d'un système de gestion des batteries;
- un onduleur CC/CA (50) adapté pour recevoir la tension continu et la fournir en sortie à un ou plusieurs utilisateurs qui y sont connectés à celui-ci, parmi lesquels au moins un dispositif de traitement de l'eau (200);
- un module de commutation électronique (60) adapté pour recevoir une tension continu dudit convertisseur CC/CA (20) et desdites batteries (30) et pour fournir une tension continu audit onduleur CC/CA (50) et à tout utilisateur de tension continu,
- une unité de commande (70) comprenant un module de commande de alimentation (71) pour commander la production et la fourniture d'énergie et un module de commande d'eau (72) pour commander le fonctionnement dudit dispositif de traitement d'eau (200);
dans lequel ledit module de commande de alimentation (71) commande le fonctionnement dudit convertisseur DC / DC (20), dudit module de commutation électronique (60) et dudit onduleur DC / AC (50), de manière à gérer l'alimentation électrique de tous les utilisateurs, et
dans lequel ledit au moins un convertisseur DC / DC (20), lesdites batteries pour le stockage d'énergie électrique (30), ledit onduleur DC / AC (50), ledit module de commutation électronique (60) et ladite unité de commande (70) sont compris dans un conteneur transportable sur roues (100) pourvu d'une interface utilisateur (110) pour l'interrogation, la gestion et la programmation de ladite unité de commande (70), de prises pour la connexion de charges électriques externes, de raccords hydrauliques d'entrée (250) et de sortie (260) dudit dispositif de traitement de l'eau (200); ledit appareil autonome intégré transportable étant **caractérisé en ce que** ledit conteneur transportable comprend au moins une structure de tiroir coulissant (120) sur laquelle sont montées lesdites batteries (30), de telle manière que les opérations d'entretien desdites batteries (30) peuvent être effectuées facilement en extrayant ladite structure de tiroir coulissant (120).

2. Appareil autonome intégré transportable selon la revendication 1, **caractérisé en ce que** lesdites batteries comprennent une pluralité de batteries Li-lon/Pb identiques et **en ce que** ledit onduleur DC/AC est adapté pour recevoir en entrée une pluralité de tensions différentes qui sont fonction du nombre desdites batteries installées dans l'appareil.

3. Appareil autonome intégré transportable selon la revendication 1 ou 2, **caractérisé en ce que** ledit dispositif de traitement de l'eau (200) comprend une pluralité de sections de traitement comprenant au moins une section de filtration par osmose inverse (210), au moins une section d'ultrafiltration (220) et au moins une section de traitement aux rayons UV (230).

4. Appareil autonome intégré transportable selon la revendication précédente, **caractérisé en ce que** ledit dispositif de traitement de l'eau (200) comprend au moins une section de désinfection à l'ozone (240) pour l'eau à usage sanitaire / potable.

5. Appareil autonome intégré transportable selon la revendication 3 ou 4, **caractérisé en ce que** lesdites sections de traitement sont reliées hydrauliquement à un conduit d'entrée de l'eau à traiter (201) et à un conduit de sortie de l'eau traitée (202), de sorte que chacune desdites sections peut être activée ou contournée par ledit module de contrôle de l'eau (72).

6. Appareil autonome intégré transportable selon la revendication précédente, **caractérisé en ce que** ledit dispositif de traitement de l'eau comprend des unités d'analyse de l'eau (205) pour l'eau traitée et l'eau à traiter et **en ce que** ledit module de commande de l'eau (72) commande l'activation ou le contournement desdites sections de traitement en fonction des résultats de l'analyse de l'eau effectuée par l'unité d'analyse (205).

7. Appareil autonome intégré transportable selon une des revendications précédentes, **caractérisé en ce qu'**il comprend un module de télécommunication (300) muni d'un module de communication par satellite (310) pour les communications vocales et de données par satellite et un module de réseau sans fil de points chauds (320).

8. Appareil autonome intégré transportable selon la revendication précédente, **caractérisé en ce que** ladite unité de commande (70) comprend un module de contrôle des communications (73) adapté pour gérer ledit module de télécommunication (300) et **en ce que** ledit module de télécommunication (300) est alimenté en tension continu par l'intermédiaire dudit module de commutation électronique (60).

9. Appareil autonome intégré transportable selon la revendication 1 ou 4, **caractérisé en ce que** ledit conteneur transportable sur roues (100) est muni d'au moins une autre structure de tiroir coulissant (120) sur laquelle sont montés des composants desdites sections de traitement (210, 220, 230, 240) dudit dispositif de traitement de l'eau (200).

10. Appareil autonome intégré transportable selon la revendication 1 et 4, **caractérisé en ce que** ledit conteneur transportable sur roues (100) a une forme compacte de parallélépipède avec des cadres de support et des panneaux latéraux pour la protection et l'isolation et est pourvu d'une porte (130) qui permet un accès large et pratique à l'espace intérieur et des stabilisateurs extractibles qui servent à stabiliser la position de l'appareil lorsqu'il est utilisé et utiles également pour éviter tout danger de basculement de l'appareil après l'extraction des structures de tiroir (120).
